# EUROPEAN PATENT APPLICATION

(11) **EP 1 435 732 A2**
(43) Date of publication of application: **07.07.2004**
(21) Application number: 03029702.2
(22) Date of filing: 23.12.2003
(51) Int. Cl.: H04N 5/445

(54) **Method and apparatus for outputting video signal of composite image apparatus**

(30) Priority: 31.12.2002 KR 2002088355
(71) Applicant: LG ELECTRONICS INC., Seoul (KR)
(72) Inventor: Park, Seung Chel, Songtan Gyeonggi-Do (KR)
(74) Representative: VOSSIUS & PARTNER

(57) **Abstract**

A method and apparatus for a composite video apparatus can reduce or prevent an image distortion of a composite video apparatus. When a progressive scanning video signal of the composite video apparatus is output to a display device, an on-screen display signal indicating the progressive scanning video signal is generated and output to the display device.

## Description

The present invention relates to a composite video apparatus, and more particularly, to a method and apparatus for outputting a video signal of a composite apparatus.

A composite video apparatus implements a tape player and an optical disk player such as a video cassette recorder (VCR) and a digital versatile disk player (DVDP) as one product/equipment. The DVDP/VCR composite apparatus outputs progressive scanning video signals (e.g., Y, Pb and Pr) from an MPEG processor of the DVDP directly through component output terminals (e.g., Y, Pb and Pr terminals) of the DVDP. The DVDP/VCR composite apparatus selectively outputs a video signal such as a front video signal, an external video signal or a video signal received by a tuner, and a composite video signal outputted from the MPEG processor of the DVDP to a display device such as a TV through an output port of the VCR. Techniques for the progressive scanning and interlaced scanning are also disclosed in USP Nos. 6,327,306 and 6,356,587.

Related art DVDP/VCR composite apparatus have various disadvantages. When the DVDP/VCR composite apparatus is in the progressive mode, a horizontal synchronizing signal frequency of the progressive scanning video signal outputted from the MPEG processor of the DVDP is double the horizontal synchronizing signal frequency of an interlaced scanning video signal. Thus, when the progressive scanning video signal is outputted as is to the display device such as TV, if the display device does not have the progressive scanning input, an image can not be normally displayed on a screen of the display device.

For example, when a user sets a format of a video signal outputted to the display device through a menu (e.g., a menu for changing a format of a video signal) of a related VCR/DVDP composite apparatus for displaying an output video format on the screen of the display device to a progressive scanning format, a progressive scanning composite video signal outputted from the MPEG processor of the DVDP is outputted as it is to the display device through the output port of the VCR unit of the composite video apparatus. Accordingly, an image displayed on the screen of the display device without having the progressive scanning input is distorted.

The above references are incorporated by reference herein where appropriate for appropriate teachings of additional or alternative details, features and/or technical background.

An object of the invention is to solve at least the above problems and/or disadvantages and to provide at least the advantages described hereinafter.

Another object of the present invention is to provide a method and apparatus configured to output a video signal of a composite video apparatus capable of reducing or preventing distortion of an output video signal of a composite video apparatus.

Another object of the present invention is to provide a method and apparatus to output a video signal of a composite video apparatus capable of generating a display signal indicating a scanning video signal format.

Another object of the present invention is to provide a method and apparatus to output a video signal of a composite video apparatus capable of generating a display signal indicating a progressive scanning video signal when the progressive scanning video signal is output from an optical disk player of a composite video apparatus and outputting the generated display signal with the progressive scanning video signal to a display device.

Another object of the present invention is to provide a method and apparatus to output a video signal of a VCR/DVDP composite video apparatus capable of reducing distortion of an image by converting an output video signal of an MPEG processor of the DVDP into an interlaced scanning video signal and outputting the interlaced scanning video signal to a display device.

Another object of the present invention is to provide a method and apparatus of a composite video apparatus capable of allowing a user to easily recognize a progressive scanning video signal by outputting either the progressive scanning video signal or an interlaced scanning video signal according to a user's request.

To achieve at least the above objects and advantages in a whole or in part, there is provided a method for outputting a video signal of a composite apparatus that includes generating a display signal indicating a progressive scanning video signal when the progressive scanning video signal of a composite video apparatus is selected for output to a display device and outputting the generated display signal to the display device.

To further achieve at least the above objects in a whole or in part, there is provided an apparatus configured to output a video signal of a composite apparatus, wherein when a progressive scanning video signal of a composite video apparatus is selected for output to a display device, a display signal indicating the progressive scanning video signal is generated, and the generated display signal is outputted to a display device.

To further achieve at least the above objects in a whole or in part, there is provided a composite apparatus that includes a processor configured to convert a video signal reproduced from an optical disk device into a video signal of a progressive scanning format and output the converted progressive scanning video signal, a signal selector of a tape device configured to select one of the progressive scanning composite video signal and a plurality of video signals and output the selected video signal and a display generator configured to generate an on-screen display signal indicating a video signal of a progressive scanning format when the progressive scanning composite video signal is outputted from the signal selector and output the generated on-screen display signal to a display device.

To further achieve at least the above objects in a whole or in part, there is provided an apparatus for outputting a video signal of a composite apparatus that includes a video encoder configured to convert a video signal of a progressive scanning format reproduced from a optical disk recorder/player into a video signal of an interlaced scanning format and output the interlaced video signal, a signal selector configured to select one of the interlaced scanning video signal and a plurality of video signals and an A/V signal processor configured to process the selected video signal and output it to a display device.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

The invention will be described in detail with reference to the following drawings in which like reference numerals refer to like elements wherein:

Figure 1 is a block diagram showing a construction of an apparatus for outputting a video signal of a composite apparatus in accordance with a first embodiment of the present invention;

Figure 2 is a flow chart showing a method for outputting a video signal of a VCR/DVDP composite apparatus in accordance with the first embodiment of the present invention;

Figure 3 is a block diagram showing a construction of an apparatus for outputting a video signal of a composite apparatus in accordance with a second embodiment of the present invention;

Figure 4 is a flow chart showing a method for outputting a video signal of a VCR/DVDP composite apparatus in accordance with the second embodiment of the present invention;

Figure 5 is a block diagram showing a construction of an apparatus for outputting a video signal of a composite apparatus in accordance with a third embodiment of the present invention;

Figure 6 is a flow chart showing a method for outputting a video signal of a VCR/DVDP composite apparatus in accordance with the third embodiment of the present invention;

Figure 7 is a block diagram showing a construction of an apparatus for outputting a video signal of a composite apparatus in accordance with a fourth embodiment of the present invention; and

Figure 8 is a flow chart showing a method for outputting a video signal of a VCR/DVDP composite apparatus in accordance with the fourth embodiment of the present invention.

Embodiments of methods and apparatus for outputting a video signal of a composite video apparatus according to the present invention are capable of reducing or preventing distortion of an image. Embodiments of methods and apparatus for outputting a video signal of a composite video apparatus are capable of automatically converting an output video signal of an MPEG processor of a DVDP of a VCR/DVDP composite video apparatus into an interlaced scanning video signal and outputting the interlaced scanning video signal to the display device or outputting an on-screen display (OSD) signal indicating that the output video signal of the MPEG processor is a progressive scanning video signal to the display device. Using a displayed indication, a user can recognize a format of an image on a display device. A user can also selectively choose a scanning format of the output video signal of the DVDP.

In a first embodiment according to the present invention, when a progressive scanning video signal outputted from an MPEG processor of a DVDP of the composite video apparatus is outputted directly or unchanged to the display device, a displayed signal (e.g. OSD signal) indicating the progressive scanning video signal can be generated. The progressive scanning video signal and the generated OSD signal can be output together to the display device so that a user can recognize a cause of a distortion of an image and can solve the image distortion phenomenon.

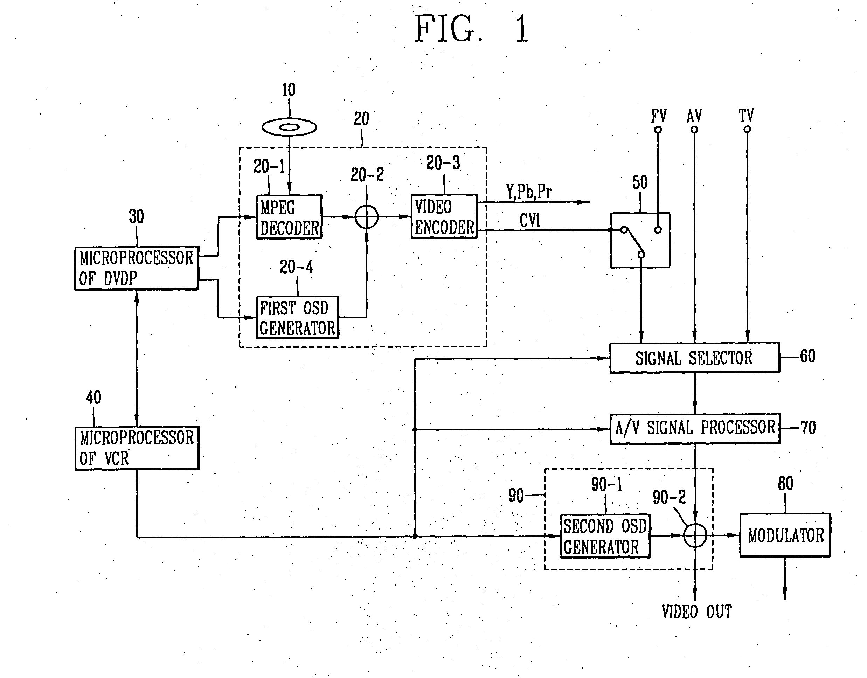

Figure 1 is a block diagram showing an apparatus for outputting a video signal of a VCR/DVDP composite apparatus in accordance with a first embodiment of the present invention. As shown in Figure 1, the apparatus for outputting a video signal of the VCR/DVDP composite apparatus can include an MPEG processor 20 of a DVDP, a microprocessor 30 of the DVDP, a microprocessor 40 of a VCR, a switch 50, a signal selector 60, an AV signal processor 70, an OSD unit 90 and a modulator 80. The MPEG processor 20 of the DVDP can receive a video signal reproduced from a disk 10 of a DVDP of the VCR/DVDP composite apparatus, convert the received video signal into video signals (e.g., Y, Pb and Pr) in a progressive scanning format and a composite video signal (CV1), and output the converted progressive scanning video signals (Y, Pb, Pr and CV1). The microprocessor 30 of the DVDP can control operations of the MPEG processor 20 and other parts of the DVDP, and the microprocessor 40 of a VCR can control operations of each part of the VCR.

The switch 50 can selectively output the composite video signal (CV1) and a front video (FV) signal. The signal selector 60 can select one of an output video signal of the switch 50, the front video signal, an external video signal (e.g., AV) and a video signal (e.g. TV signal) received by a tuner or the like, and output the selected video signal. The A/V (Audio/Video) signal processor 70 can output the video signal outputted from the signal selector 60. The OSD unit 90 can generate an OSD signal indicating the composite video signal (CV1) of progressive scanning format when the progressive scanning composite video signal (CV1) is outputted to the A/V signal processor 70, and display the generated OSD signal on a screen of the display device, and the modulator 80 can modulate the video signal outputted from the OSD unit 90 and output the modulated video signal to a display device (e.g., an antenna terminal of a display device).

The OSD unit 90 can include a second OSD generator 90-1 and a combining unit 90-2. The second OSD generator 90-1 is for generating an OSD signal indicating the video signal of progressive scanning format in a character/graphic when the progressive scanning composite video signal (CV1) is outputted to the A/V signal processor 70, and the combining unit 90-2 is for outputting the generated OSD signal to a video output terminal of the display device and to the modulator 80.

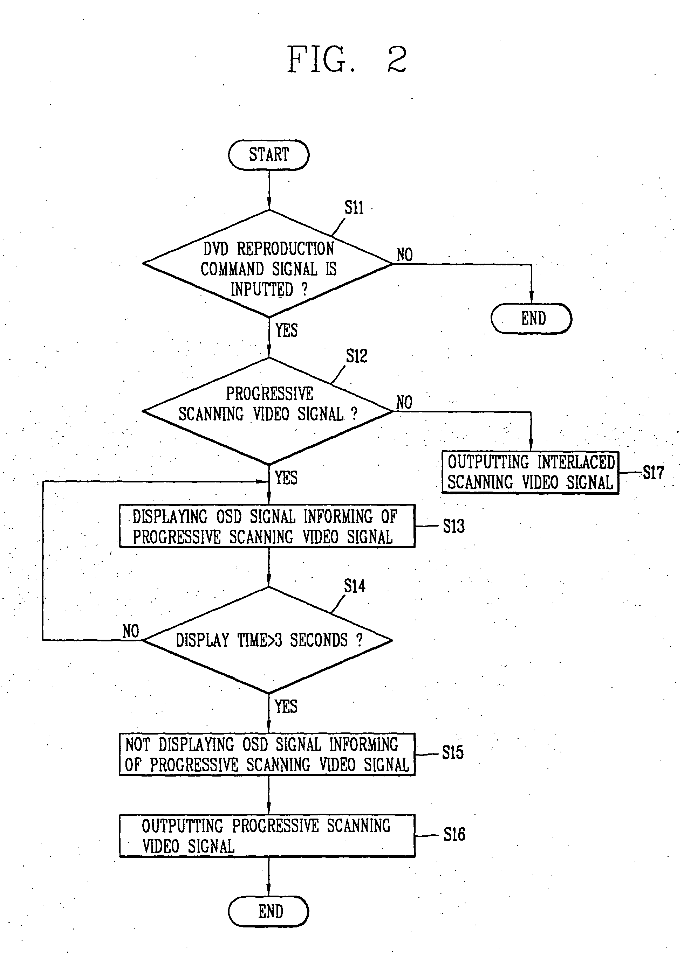

Figure 2 is a flow chart for outputting a video signal of a VCR/DVDP composite apparatus in accordance with a first embodiment of a method according to the present invention. The method shown in Figure 2 can be applied to and will be described with reference to the apparatus of Figure 1. However, the present invention is not intended to be so limited.

First, when a progressive scanning video format is selected from menus of the DVDP, if a DVD can reproduction command signal is inputted by a user, the MPEG processor 20 of the DVDP can reproduce/process a signal recorded in the disk 10 and output reproduced/processed video signals (e.g. Y, Pb and Pr) of the progressive scanning format. In addition, the MPEG processor 20 output the video signals (Y, Pb, Pr) to component output terminals (e.g., Y, Pb and Pr terminals) of the DVDP and directly output the composite video signal (CV1) of progressive scanning format to the switch 50 of the VCR unit (block S11).

The switch 50 preferably selects one of the composite video signal (CV1) of progressive scanning format directly outputted from the MPEG processor 20 of the DVDP and the front video signal (FV), and outputs the selected video signal to the signal selector 60. The signal selector 60 preferably selects one of the video signal outputted from the switch 60, the external video signal (AV) and the video signal received by the tuner (e.g., TV signal) on the basis of the control signal of the microprocessor 40 of the VCR, and outputs the selected video signal to the A/V signal processor 70 of the VCR unit.

When the composite video signal (CV1) of progressive scanning format outputted from the MPEG processor 20 of the DVDP is transmitted to the A/V signal processor 70 through the switch 50 and the signal selector 60, the microprocessor 40 of the VCR recognizes the fact that the video signal being supplied to the A/V signal processor 70 is the video signal of progressive scanning format preferably through interfacing with the microprocessor 30 of the DVDP. When the composite video signal (CV1) of progressive scanning format is transmitted as it is to the video output terminal of the display device in the A/V signal processor 70, the microprocessor 40 of the VCR preferably outputs a control signal indicating that the video signal being outputted to the display device is the video signal of progressive scanning format that can not be normally displayed by the display device, to the OSD unit 90 (block S12).

When the progressive scanning composite video signal (CV1) is outputted to the display device through the A/V signal processor 70, the OSD unit 90 preferably generates an OSD signal indicating the video signal of progressive scanning format as a character/graphic dependent upon the control signal of the microprocessor 40 of the VCR. The OSD unit 90 can output the generated OSD signal to the video output terminal of the display device (block S13).

Thus, the OSD unit 90 can inform the video signal of progressive scanning format for a predetermined time (e.g., 3 seconds) dependent upon the control signal of the microprocessor 40 of the VCR. Accordingly, when a display device can not display the progressive scanning video signal, the OSD unit 90 preferably displays an OSD signal indicating that a DVD reproduction video signal can not be displayed, on the display device (block S14).

When the predetermined time elapses (block S14), the OSD unit 90 preferably does not (e.g., stops) display the OSD signal (block S15) and outputs the progressive scanning composite video signal (CV1) outputted from the A/V signal processor 70 to the video output terminal of the display device (block S16).

The OSD unit 90 can also output the progressive scanning composite video signal (CV1) to the modulator 80. The modulator 80 can modulate the progressive scanning composite video signal (CV1) and outputs the modulated video signal to the display device.

Therefore, when the progressive scanning video signal outputted from the MPEG processor 20 of the DVDP of the composite video apparatus is outputted to the display device, the user can easily recognize a cause of distortion of an image through the OSD signal displayed in a character/graphic on the screen of the display device. If the video signal outputted from the MPEG processor 20 is a video signal of interlaced scanning format (block S12), the interlaced scanning video signal is preferably outputted unchanged or directly to the display device (block S17).

In a second embodiment, when an output video format is set as the progressive scanning format in the DVDP mode of the VCR/DVDP composite apparatus by a user, the video signal of progressive scanning format outputted from the MPEG processor 20 of the DVDP can be converted into a composite video signal (CV2) of interlaced scanning format through a video encoder 100, which is then outputted to the display device through the output port of the VCR/DVDP composite apparatus. Thus, the user can normally view an image program of the video signal outputted from the MPEG processor 20 of the DVDP through the display device without an image distortion.

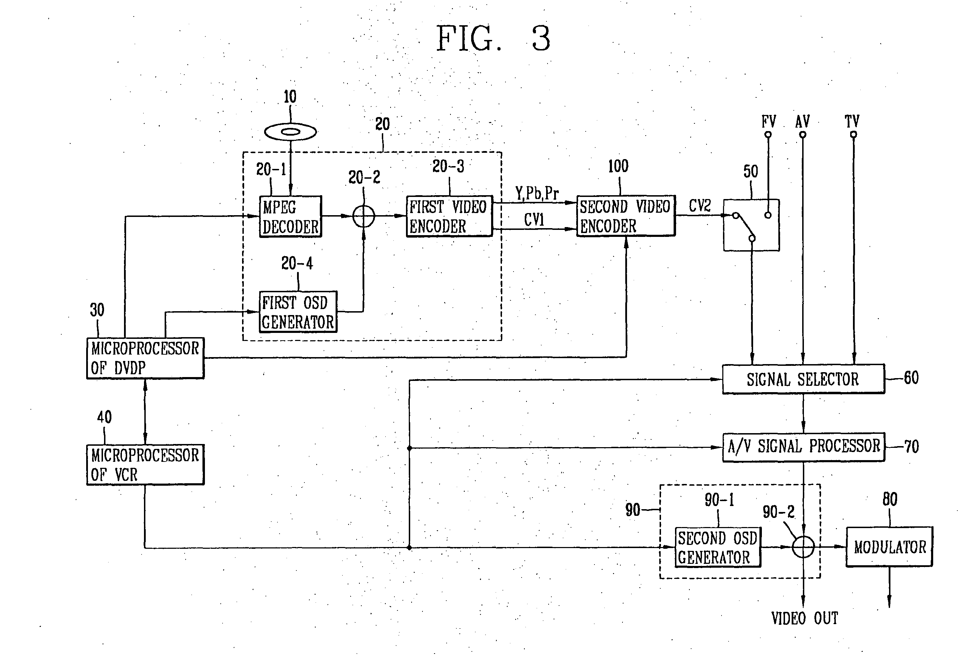

Figure 3 is a block diagram showing an apparatus for outputting a video signal of a VCR/DVDP composite apparatus in accordance with a second embodiment of the present invention. As shown in Figure 3, the apparatus for outputting a video signal of the VCR/DVDP composite apparatus can include an MPEG processor 20 of a DVDP for receiving a video signal reproduced from a disk 10 of a DVDP of the VCR/DVDP composite apparatus, converting the received video signal into video signals (e.g., Y, Pb and Pr) of progressive scanning format and a composite video signal (CV1), and outputting the converted progressive scanning video signals (Y, Pb, Pr and CV1), and a second video encoder 100 for converting the progressive scanning video signals (e.g., Y, Pb, Pr, CV1) outputted from the MPEG processor 20 of the DVDP into an interlaced scanning composite video signal (CV2), and outputting the converted interlaced scanning composite video signal (CV2). A microprocessor 30 of the DVDP can control operations of the MPEG processor 20 of the DVDP, the second video encoder 100 and other parts of the DVDP, and a microprocessor 40 of a VCR can control operations of each part of the VCR.

A switch 50 can selectively output the interlaced composite video signal (CV2) or a front video (FV) signal of interlaced scanning format. A signal selector 60 can select one of an output video signal of the switch 50, an external input video signal (e.g., AV) of interlaced scanning format and a video signal (e.g. TV signal) of interlaced scanning format received by a tuner and output the selected video signal. An A/V signal processor 70 can output the video signal outputted from the signal selector 60. An OSD unit 90 can combine an OSD (On Screen Display) signal to the video signal outputted from the A/V signal processor 70 and output it to a video output terminal of a display device, and a modulator 80 can modulate the video signal output from the OSD unit 90 and output the modulated video signal to the display device (e.g., an antenna terminal of a TV).

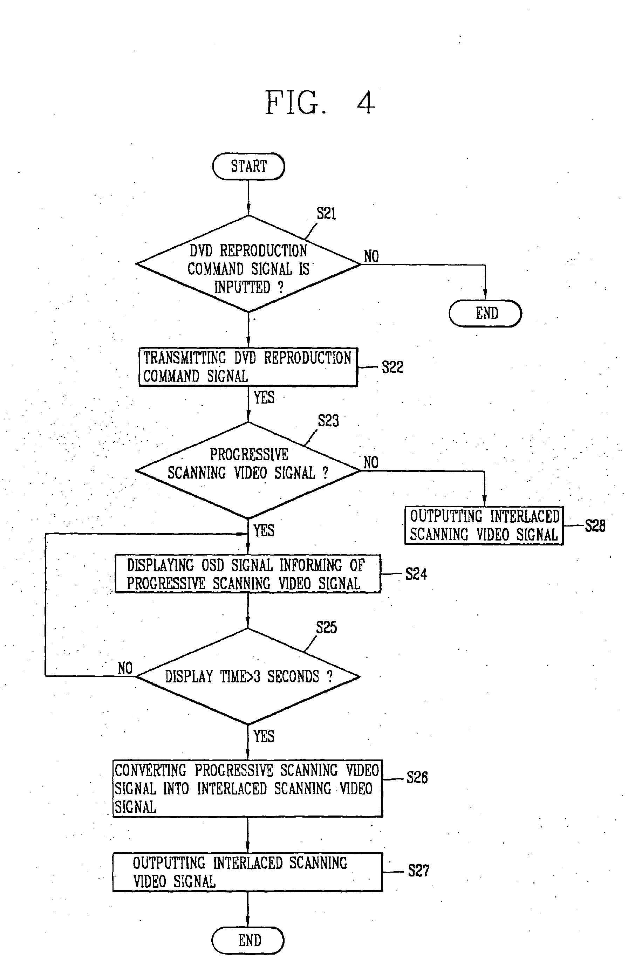

Figure 4 is a flow chart for outputting a video signal of a VCR/DVDP composite apparatus in accordance with a second embodiment of a method according to the present invention. The method shown in Figure 4 can be applied to and will be described with reference to the apparatus of Figure 3. However, the present invention is not intended to be so limited.

First, when a progressive scanning video format is selected from menus of the DVDP, if a DVD reproduction command signal is inputted by a user (block S21), the microprocessor 40 of the VCR can transmit the DVD reproduction command signal to the microprocessor 30 of the DVDP (block S22).

When the composite video signal (CV1) of progressive scanning format is transmitted to the second video encoder 100, the microprocessor 30 of the DVDP can output a control signal for indicating the video signal of progressive scanning format to a first OSD generator 20-4 (block S23).

When the progressive scanning composite video signal (CV1) is outputted to the A/V signal processor 70 through the second video encoder 100, the first OSD generator 20-4 can generate an OSD signal informing of the video signal of progressive scanning format dependent upon the control signal of the microprocessor 30 of the DVDP, and output the generated OSD signal to a combiner 20-2. The combiner 20-2 can output the OSD signal to a first video encoder 20-3. Herein, the first OSD generator 20-4 may generate an OSD signal informing of the video signal of progressive scanning format in a character/graphic or various forms.

The first video encoder 20-3 outputs the OSD signal to the second video encoder 100. Then, the second video encoder 100 can convert the OSD signal into an OSD signal of interlaced scanning format, and output the converted OSD signal to the video output terminal of the display device (block S24).

That is, the first OSD generator 20-4 can inform of the video signal of progressive scanning format for a predetermined time (e.g., 3 seconds) dependent upon the control signal of the microprocessor 40 of the DVDP, and in case of a display device that can not display the progressive scanning video signal, the OSD unit 90 can display an OSD signal indicating that a DVD reproduction video signal can not be displayed, on the display device (block S25).

Thereafter, the MPEG processor 20 of the DVDP of the composite video apparatus can reproduce/process a signal recorded in the disk 10 and output the reproduced/processed progressive scanning video signals (e.g., Y, Pb andPr). The MPEG processor 20 of the DVDP preferably transmits both the video signals (Y, Pb and Pr) and the progressive scanning composite video signal (CV1) to the second video encoder 100. The MPEG processor 20 of the DVDP and the second video encoder 100 can be operated according to the control signal of the microprocessor 30 of the DVDP.

The second video encoder 100 preferably converts the inputted progressive scanning video signals (e.g., Y, Pb, Pr and CV1) into the composite video signal (CV2) of interlaced scanning format, and outputs the converted interlaced scanning composite video signal (CV2) to the switch 50 (block S26).

The switch 50 preferably selects one of the interlaced scanning composite video signal (CV2) outputted from the second video encoder 100 and the front video (FV) signal received from an external source, and outputs the selected video signal to the signal selector 60. The signal selector 60 preferably selects one of the interlaced scanning video signal, that is, the video signal outputted from the switch 50, the external video signal (e.g., AV), the video signal (e.g., TV signal) received by the tuner under the control of the microprocessor 40 of the VCR, and outputs the selected video signal to the A/V signal processor 70 of the VCR unit.

The A/V signal processor 70 can output the interlaced scanning video signal outputted from the signal selector 60 to the OSD unit 90 under the control of the microprocessor 40.

The OSD unit 90 preferably combines the OSD signal to the interlaced scanning video signal outputted from the A/V signal processor 70, and outputs the combined signal to the video output terminal of the display device or outputs the interlaced video signal outputted from the A/V signal processor 70 to the modulator 80. The modulator 80 can modulate the interlaced video signal outputted from the OSD unit 90 and output the modulated video signal to the display device such as TV (block S27).

Accordingly, when the output video format is set as the progressive scanning format in the DVDP mode of the VCR/DVDP composite apparatus, the user can be informed that the video signal outputted from the MPEG processor 20 of the DVDP is the video signal of progressive scanning format, the video signal of progressive scanning format outputted from the MPEG processor 20 of the DVDP can be converted into the composite video signal (CV2) of interlaced scanning format through the second video encoder 100, and the converted interlaced scanning composite video signal can be outputted to the display device through the output port of the VCR/DVDP composite apparatus. Thus, the user can normally view an image program of the video signal outputted from the MPEG processor 20 of the DVDP through the display device without an image distortion phenomenon.

If the video signal outputted from the MPEG processor 20 is a video signal of interlaced scanning format (block S23), the interlaced scanning video signal is outputted as it is to the display device (block S28).

In a third embodiment, when an output video format is set as a progressive scanning format in the DVDP mode of the VCR/DVDP composite apparatus, an OSD signal can be converted into an interlaced scanning video signal indicating a progressive scanning video signal outputted from the MPEG processor 20 of the DVDP and outputted, and then, the progressive scanning video signal or the interlaced scanning video signal can be outputted according to a control signal or a user's request. Thus, the user can recognize the progressive scanning video signal and then select either the progressive scanning video signal or the interlaced scanning video signal according to a video format of a display device.

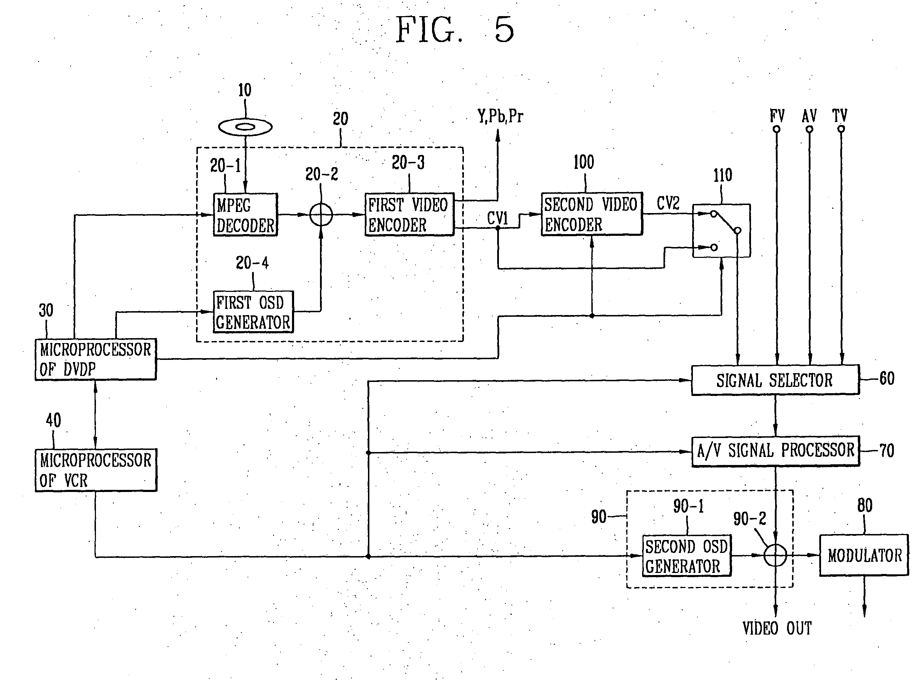

Figure 5 is a block diagram showing an apparatus for outputting a video signal of a VCR/DVDP composite apparatus in accordance with a third embodiment of the present invention. As shown in Figure 5, the apparatus for outputting a video signal of the VCR/DVDP composite apparatus can include an MPEG processor 20 of a DVDP for receiving a video signal reproduced from a disk 10 of a DVDP of the VCR/DVDP composite apparatus, converting the received video signal into video signals (e.g., Y, Pb and Pr) of progressive scanning format and a composite video signal (CV1), and outputting a display (e.g., an OSD) signal informing of the progressive scanning video signals (e.g., Y, Pb, Pr and CV1), and a second video encoder 100 for converting the display signal outputted from the MPEG processor 20 of the DVDP into a signal of interlaced scanning format and outputting the converted display signal of interlaced scanning format. A microprocessor 30 of the DVDP can control operations of the MPEG processor 20 of the DVDP, the second video encoder 100 and other parts of the DVDP, and a microprocessor 40 of a VCR can control operations of each part of the VCR.

A switch 110 can selectively output the interlaced composite video signal or a progressive scanning composite video signal on the basis of a control signal of the microprocessor 30 of the DVDP. A signal selector 60 can select one of an output video signal of the switch 110, a front video (FV) signal, an external video signal (e.g., AV) and a video signal (e.g., TV signal) received by a tuner and output the selected signal. An A/V signal processor 70 can output the video signal outputted from the signal selector 60. An OSD unit 90 can combine an OSD (On Screen Display) signal to the video signal outputted from the A/V signal processor 70 and output it to a video output terminal of a display device. A modulator 80 can modulate the video signal outputted from the OSD unit 90 and output the modulated video signal to the display device (e.g., an antenna terminal of a TV).

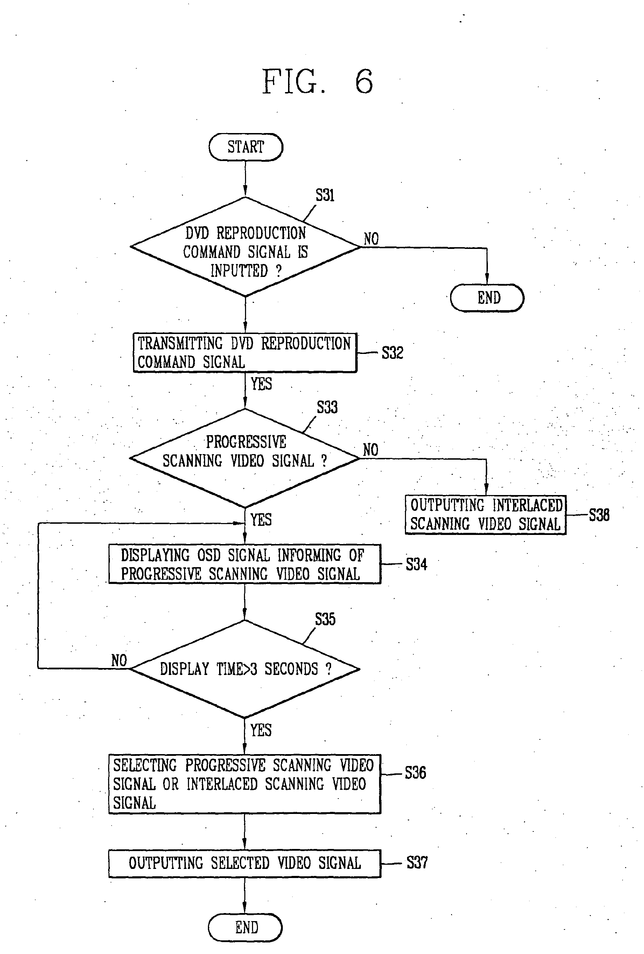

Figure 6 is a flow chart for outputting a video signal of a VCR/DVDP composite apparatus in accordance with a third embodiment of a method according to the present invention. The method shown in Figure 6 can be applied to and will be described with reference to the apparatus of Figure 5. However, the present invention is not intended to be so limited.

When a DVD reproduction command signal is inputted by a user (block S31), the microprocessor 40 of the VCR can transmit the DVD reproduction command signal to the microprocessor 30 of the DVDP (block S32).

When the composite video signal (CV1) of progressive scanning format is transmitted to the second video encoder 100, the microprocessor 30 of the DVDP can output a control signal for indicating the video signal of progressive scanning format to a first OSD generator 20-4 (block S33).

When the progressive scanning composite video signal (CV1) from the MPEG processor 20 of the DVDP is outputted to the second video encoder 100, the first OSD generator 20-4 can generate an OSD signal informing of the video signal of progressive scanning format dependent upon the control signal of the microprocessor 30 of the DVDP, and output the generated OSD signal to a combiner 20-2. The combiner 20-2 can output the OSD signal to the second video encoder 100 through the first video encoder 20-3.

The second video encoder 100 can convert the OSD signal into an OSD signal of interlaced scanning format, and output the converted OSD signal to the video output terminal of the display device (block S34).

That is, the first OSD generator 20-4 can inform of the video signal of progressive scanning format for a predetermined time (e.g., 3 seconds) dependent upon the control signal of the microprocessor 40 of the DVDP, and at the same time, preferably displays the OSD signal so that one of the progressive scanning video signal and the interlaced scanning video signal of the DVDP can be selected (e.g., using an electronic switch 110) on the display device (block S35).

Thereafter, the MPEG processor 20 of the DVDP of the composite video apparatus can reproduce/process a signal recorded in the disk 10 and output the reproduced/processed progressive scanning video signals (e.g., Y, Pb and Pr). The MPEG processor 20 of the DVDP preferably directly transmits the video signals (Y, Pb and Pr) to the component output terminal (e.g., Y, Pb and Pr terminals) (not shown) of the DVDP, and transmits the progressive scanning composite video signal (CV1) to the second video encoder 100.

The second video encoder 100 can convert the progressive scanning video signal (CV1) into the composite video signal (CV2) of interlaced scanning format, and output the converted interlaced scanning composite video signal (CV2) to the switch 110.

Thereafter, when the user selects the interlaced scanning video signal, for example through the OSD signal displayed on the screen of the display device, the microprocessor 30 of the DVDP can output a control signal for selecting the interlaced scanning video signal to the switch 110. At this time, the switch 110 can output the interlaced scanning video signal outputted from the second video encoder 100 to the signal selector 60 according to the control signal (block S36).

When the user selects the progressive scanning video signal through the OSD signal displayed on the screen of the display device, the microprocessor 30 of the DVDP can output a control signal for selecting the progressive scanning video signal to the switch 110. At this time, the switch 110 can output the progressive scanning video signal outputted from the first video encoder 20-3 to the signal selector 60 according to the control signal (block S36).

The signal selector 60 can select one of the interlaced scanning video signal or the progressive scanning video signal, that is, the video signal outputted from the switch 110, the front video (FV) signal, the external video signal and the video signal (e.g., TV signal) received by a tuner, and output the selected video signal to the A/V signal processor 70 of the VCR unit. The A/V signal processor 70 can output the video signal outputted from the signal selector 60 to the OSD unit 90.

The OSD unit 90 preferably combines an OSD signal to the video signal outputted from the A/V signal processor 70, and outputs the combined signal to the video output terminal of the display device or outputs the video signal outputted from the A/V signal processor 70 to the modulator 80. The modulator 80 can modulate the video signal outputted from the OSD unit 90 and output the modulated video signal to the display device such as a TV (block S37).

Accordingly, when an output video format of the MPEG processor 30 of the DVDP is set as a progressive scanning format in the DVDP mode of the VCR/DVDP composite apparatus, the OSD signal indicating the progressive scanning video signal outputted from the MPEG processor 20 of the DVDP is preferably converted into the interlaced scanning signal and displayed on the screen of the display device. Then, the progressive scanning video signal or the interlaced scanning video signal can be outputted responsive to a control signal or a user's request, so that the system or the user can easily recognize the progressive scanning video signal and select the progressive scanning video signal or the interlaced scanning video signal according to a video format of the display device, a user preference or the like.

If the video signal outputted from the MPEG processor 20 is the video signal of interlaced scanning format (block S33), the interlaced scanning video signal is outputted as it is to the display device (block S38).

In a fourth embodiment, when an output video format of an MPEG processor 20 of the DVDP is set as a progressive scanning format in the DVDP mode of the VCR/DVDP composite apparatus, an OSD signal indicating a progressive scanning video signal outputted from the MPEG processor 20 of the DVDP can be converted into an interlaced scanning video signal and outputted, and then, the DVDP reproduction video signal is outputted as the interlaced scanning video signal or the progressive scanning video signal, whereby the user can easily recognize the progressive scanning video signal.

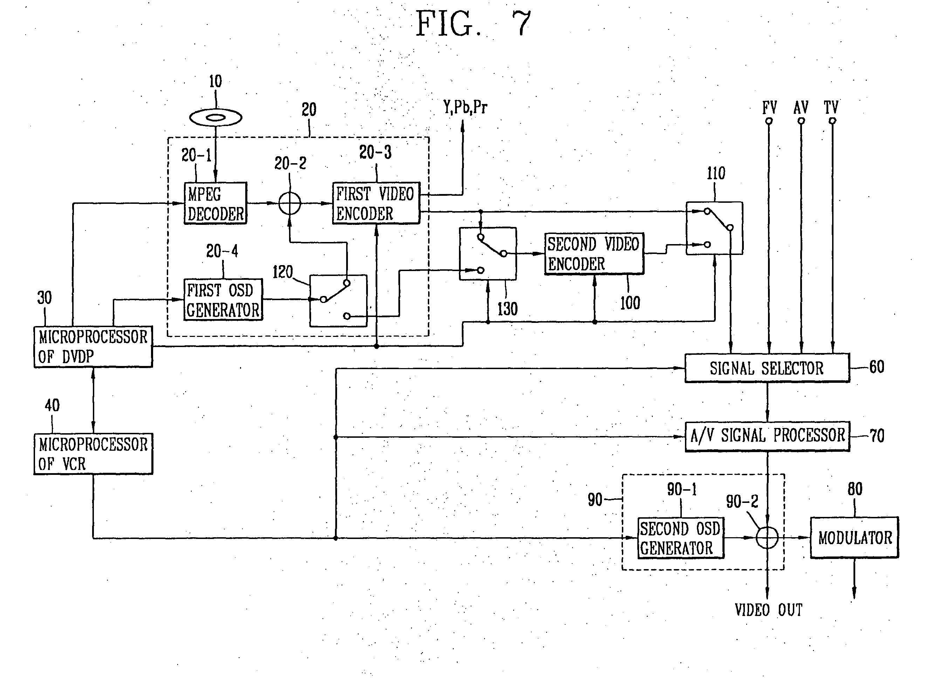

Figure 7 is a block diagram showing an apparatus of a VCR/DVDP composite apparatus in accordance with a fourth embodiment of the present invention. As shown in Figure 7, the preferred embodiment apparatus of the VCR/DVDP composite apparatus can include an MPEG decoder 20-1 for decoding a video signal reproduced from a disk 10 of a DVDP of the VCR/DVDP composite apparatus, a first OSD generator 20-4 for generating an OSD signal according to a control signal of a microprocessor 30 of the DVDP, a switch 120 for selectively outputting the OSD signal, a combiner 20-2 for combining the OSD signal selected by the switch 120 and the decoded signal, and a first video encoder 20-3 for converting the combined signal into a signal of progressive scanning format. The VCR/DVDP composite apparatus can further include a switch 130 for selecting either the video signal outputted from the first video encoder 20-3 or the OSD signal selected by the switch 120 on the basis of a control signal of the microprocessor 30 of the DVDP, a second video encoder 100 for converting the OSD signal selected by the switch 130 into an OSD signal of interlaced scanning format, or converting the video signal selected by the switch 130 into a video signal of interlaced scanning format, and a switch 110 for selecting either the video signal outputted from the first video encoder 20-3 or the video signal of interlaced scanning format outputted from the second video encoder. The microprocessor 30 of the DVDP can control operations of the MPEG processor 20 of the DVDP, the second video encoder 100 and other parts of the DVDP.

A microprocessor 40 of a VCR unit can control operations of the apparatus and of each part of a VCR unit, and a signal selector 60 can select and output one of the output signal of the switch 110, a front video (FV) signal, an external input video signal (e.g., AV) and a video signal (e.g., TV signal) received by a tuner. An A/V signal processor 70 can output the video signal outputted from the signal selector 60, and an OSD unit 90 can combine an OSD signal with the video signal outputted from the A/V signal processor 70, and output it to a video output terminal of a display device. A modulator 80 can modulate a video signal output from the OSD unit 90 and outputting the modulated video signal to the display unit (e.g., an antenna terminal of a TV).

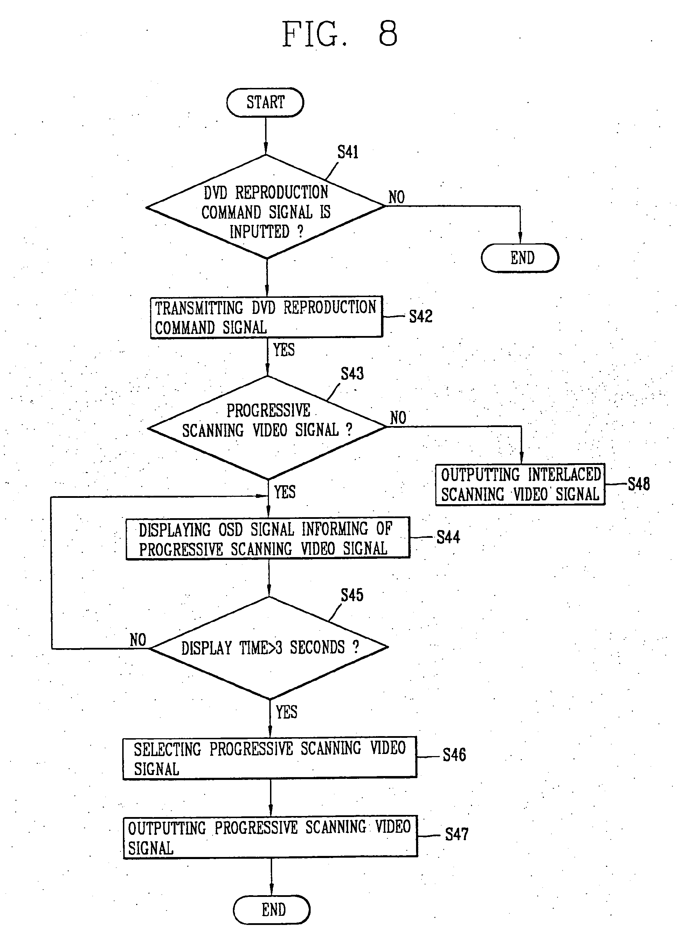

Figure 8 is a flow chart for outputting a video signal of a VCR/DVDP composite apparatus in accordance with a fourth embodiment of a method according to the present invention. The method shown in Figure 7 can be applied to and will be described with reference to the apparatus of Figure 8. However, the present invention is not intended to be so limited.

When a DVD reproduction command signal is inputted by a user (block S41), the microprocessor 40 of the VCR transmits the DVD reproduction command signal to the microprocessor 30 of the DVDP (block S42). When a composite video signal (CV1) of progressive scanning format outputted from the MPEG processor 20 of the DVDP is transmitted to the switch 110, the microprocessor 30 of the DVDP outputs a control signal indicating the video signal of progressive scanning format to the first OSD generator 20-4 (block S43).

When the progressive scanning composite video signal (CV1) is outputted to the switch 110, the first OSD generator 20-4 can generate an OSD signal informing of the video signal of progressive scanning format dependent upon a control signal of the microprocessor 30 of the DVDP, and output the OSD signal to the switch 120. At this time, the switch 120 can output the OSD signal to the combiner 20-2 or to the switch 130 dependent upon the control signal of the microprocessor 30 of the DVDP.

The combiner 20-2 preferably combines the OSD signal and the progressive scanning video signal, and outputs the combined signal to the first video encoder 20-3. At this time, the first video encoder 20-3 can output the video signal of progressive scanning format corresponding to the combined signal to the switches 110 and 130.

The switch 130 preferably selects either the video signal outputted from the first video encoder 20-3 or the OSD signal selected by the switch 120 on the basis of the control signal of the microprocessor 30 of the DVDP, and outputs the selected signal to the second video encoder 100.

The second video encoder 100 can convert the OSD signal outputted through the switch 130 into an OSD signal of interlaced scanning format, and output the converted OSD signal to the switch 110. Alternatively, the second video encoder 100 can convert the video signal outputted from the first video encoder 20-3 into a video signal of interlaced scanning format and output the converted video signal to the switch 110. The converted OSD signal is outputted to a video output terminal of the display device (block S44). That is, the OSD signal outputted through the second video encoder 100 is displayed on the display device for a predetermined time (e.g., 3 seconds) dependent upon the control signal of the microprocessor 30 of the DVDP (block S45). Thereafter, when the first OSD generator 20-4 displays the OSD signal on the screen for the predetermined time, the MPEG processor 20 of the DVDP of the composite video apparatus reproduces/processes a signal recorded in the disk 10, and outputs the reproduced/processed progressive scanning video signals (e.g., Y, Pb and Pr) to the switch 110.

Subsequently, the switch 110 can output either the progressive scanning video signal outputted from the first video encoder 20-3 or the interlaced scanning video signal outputted from the second video encoder 100 to the signal selector 60 on the basis of the control signal of the microprocessor 30 of the DVDP (block S46).

Then, the signal selector 60 preferably selects one of the video signal, that is, the video signal outputted from the switch 110, a front video (FV) signal, an external video signal (e.g., AV) and a video signal (e.g., TV signal) received by a tuner under the control of the microprocessor 40 of the VCR, and outputs the selected video signal to the A/V signal processor 70 of the VCR unit. The A/V signal processor can 70 output the video signal outputted from the signal selector 60 to the OSD unit 90.

The OSD unit 90 preferably combines an OSD signal to the video signal outputted from the A/V signal processor 70, and outputs the combined signal to a video output terminal of the display device or outputs the video signal outputted from the A/V signal processor 70 to the modulator 80. The modulator 80 can modulate the video signal outputted from the OSD unit 90 and output the modulated video signal to the display device such as a TV (block S47).

Accordingly, when the output video format is set as the progressive scanning format in the DVDP mode of the VCR/DVDP composite apparatus (e.g., by the user), the OSD signal indicating the progressive scanning video signal outputted from the MPEG processor 20 of the DVDP is preferably converted into the interlaced scanning video signal and outputted. Then, the progressive scanning video signal or the interlaced scanning video signal can be outputted on the screen of the display device, whereby the user can easily recognize the progressive scanning video signal. In addition, the user can select the progressive scanning video signal or the interlaced scanning video signal.

If the video signal outputted from the MPEG processor 20 is the video signal of interlaced scanning format (block S43), the interlaced scanning video signal is outputted as it is to the display device (block S48).

As described above, embodiments of methods and apparatus for outputting a video signal composite apparatus such as a VCR/DVDP composite apparatus have the various advantages. When an output video signal (e.g., the video signal of progressive scanning format) of the MPEG processor of the DVDP is outputted as it is to the display device, an OSD signal indicating the video signal is a video signal of progressive scanning format is outputted to a screen of the display device so that the user can easily cope with an image distortion phenomenon. In other words, the user can easily recognize a cause of the image distortion on the screen of the display device through the OSD signal. Further, the user can select a menu for changing the video signal outputted to the display device to a progressive scanning format or to an interlaced scanning format and change the video signal to an interlaced scanning format through the selected menu so that the user can easily and normally view an image corresponding to the composite video signal outputted from the MPEG processor of the DVDP.

In addition, when the user sets an output video format as the progressive scanning format through the menu, an output video signal (e.g., a video signal of progressive scanning format) of the MPEG processor of the DVDP is converted into a video signal of interlaced scanning format and outputted to the display device so that the user can normally view an image of the output video signal of the MPEG processor of the DVDP without a distortion. In addition to the VCR/DVDP composite apparatus, embodiments of the present invention can be also applied to a case where a new composite video apparatus is fabricated by adding a product which requires a video signal conversion.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method for outputting a video signal of a composite apparatus comprising:
generating a display signal indicating a progressive scanning video signal when the progressive scanning video signal of a composite video apparatus is selected for output to a display device; and
outputting the generated display signal to the display device.

2. The method of claim 1, wherein the display signal is in an interlaced scan format.

3. The method of claim 1 or 2, wherein the outputting the generated display signal comprises outputting a generated on-screen display signal and the progressive scanning video signal together to the display device.

4. The method of claim 3, wherein the outputting the generated display signal comprises outputting a generated on-screen display signal before a title and video data of the progressive scanning video signal is outputted to the display device.

5. The method of claim 1, 2, 3 or 4, further comprising:
converting the progressive scanning video signal into an interlaced scanning video signal when the output video signal of the composite video apparatus is the progressive scanning video signal; and
outputting the converted interlaced scanning video signal to the display device.

6. The method of claim 5, wherein the outputting the generated display signal comprises outputting a generated on-screen display signal before the converted interlaced scanning video signal is outputted to the display device.

7. The method of any one of claims 1 to 6, wherein the composite video apparatus is a tape player/optical disk player composite apparatus.

8. The method of claim 6, wherein the composite video apparatus is at least one of a VCR/DVDP composite apparatus and a VCR/DVDR composite apparatus.

9. The method of any one of claims 1 to 8, comprising:
generating an additional display signal indicating a selection of an output a progressive scanning video signal or a corresponding interlaced scanning video signal; and
outputting the selected video signal in the selected video scan format to the display device.

10. The method of claim 9, wherein the outputting the generated display signal comprises outputting a generated on-screen display signal before the selected video signal is outputted to the display device.

11. The method of claim 9 or 10, wherein a user performs the selection of the progressive scanning video signal and the corresponding interlaced scanning video signal.

12. The method of claim 9, 10 or 11, wherein the additional display signal is an on-screen display generated in an interlaced scan format.

13. The method of claim 9, 10, 11 or 12, wherein the display signal and the additional display signal are combined.

14. The method of claim 9, 10, 11, 12 or 13, wherein the additional display signal is an on-screen display (OSD) generated in one of the progressive scan format and the interlaced scan format.

15. The method of claim 14, wherein a user performs the selection of the progressive scanning OSD signal and the corresponding interlaced scanning OSD.

16. The method of claim 15, wherein the user performs the selection of the progressive scanning video signal and the corresponding interlaced scanning video signal.

17. An apparatus configured to output a video signal of a composite apparatus, wherein when a progressive scanning video signal of a composite video apparatus is selected for output to a display device, a display signal indicating the progressive scanning video signal is generated, and the generated display signal is outputted to a display device.

18. The apparatus of claim 17, wherein the composite video apparatus is a VCR/DVDP composite apparatus, and wherein the generated display signal is an on-screen display signal in interlaced scanning format.

19. The apparatus of claim 18, wherein when an output video signal composite apparatus is the progressive scanning video signal, the output video signal is one of (1) converted into an interlaced scanning video signal and (2) outputted as the progressive scanning video signal with the generated on-screen display signal.

20. The apparatus of claim 19, wherein the on-screen display signal indicating the progressive scanning video signal is outputted before a title and data of the progressive scanning video signal.

21. The apparatus of claim 18, 19 or 20, wherein an additional display signal is generated providing for selection of the output signal in the progressive scanning video format or an interlaced video format, and wherein the output signal is outputted in the selected format.

22. A composite apparatus, comprising:
a processor configured to convert a video signal reproduced from an optical disk device into a video signal of a progressive scanning format and output the converted progressive scanning video signal;
a signal selector of a tape device configured to select one of the progressive scanning composite video signal and a plurality of video signals, and output the selected video signal; and
a display generator configured to generate an on-screen display signal indicating a video signal of a progressive scanning format when the progressive scanning composite video signal is outputted from the signal selector and output the generated on-screen display signal to a display device.

23. The composite apparatus of claim 22, comprising:
a video encoder configured to convert the progressive scanning video signal into an interlaced scanning video signal, wherein the processor is configured to control operations of the optical disk device and the video encoder,;
a microprocessor of the tape device configured to control operations of the tape device; and
a switch configured to selectively output the interlaced scanning video signal and the progressive scanning video signal.

24. The composite apparatus of claim 23, comprising:
a signal selector configured to selectively output one of a video signal, an external video signal and a video signal received by a tuner as selected by the switch; an
A/V signal processor coupled to the signal selector and configured to process the selected video signal; and
a modulator configured to modulate a video signal outputted from the A/V signal processor and output the modulated video signal to the display device.

25. The composite apparatus of claim 22, 23 or 24, wherein the optical disk device comprises:
an MPEG decoder configured to receive an encoded signal;
a first OSD generator configured to generate an on-screen display signal indicating a progressive scanning video signal when the progressive scanning video signal is outputted to the display device, and display the generated on-screen display signal on a screen of the display device;
a switch coupled to the first OSD generator;
a combiner configured to receive outputs from the switch and the MPEG decoder; and
a first video encoder coupled to the combiner to output the progressive scanning video signal.

26. An apparatus for outputting a video signal of a composite apparatus, comprising:
a video encoder configured to convert a video signal of a progressive scanning format reproduced from a optical disk recorder/player into a video signal of an interlaced scanning format and output the interlaced video signal;
a signal selector configured to select one of the interlaced scanning video signal and a plurality of video signals; and
an A/V signal processor configured to process the selected video signal and output it to a display device.

27. The apparatus of claim 26, further comprising:
an OSD generator configured to generate an on-screen display signal indicating a progressive scanning video signal when a video signal of progressive scanning format is directly inputted to the A/V signal processor, and display the generated on-screen display signal on a screen of the display device, wherein the plurality of video signals include a front video signal, an external video signal and a TV signal.
